# EUROPÄISCHE PATENTSCHRIFT

(11) **EP 1 216 376 B1**
(45) Veröffentlichungstag und Bekanntmachung des Hinweises auf die Patenterteilung: **23.11.2005**
(21) Anmeldenummer: 00964149.9
(22) Anmeldetag: 08.09.2000
(51) Int. Cl.: F16L 9/00

(54) **ROHR FÜR ROHRLEITUNGEN, INSBESONDERE FÜR KORROSIVE ODER ABRASIVE MEDIEN**
PIPE FOR PIPELINES, ESPECIALLY FOR TRANSPORTING CORROSIVE OR ABRASIVE MEDIA
TUYAU POUR CANALISATIONS DESTINEES NOTAMMENT A TRANSPORTER DES FLUIDES CORROSIFS OU ABRASIFS

(30) Priorität: 10.09.1999 DE 19943230
(43) Veröffentlichungstag der Anmeldung: 26.06.2002
(73) Patentinhaber: immuG Rohr + Schlauch GmbH, 39356 Walbeck (DE)
(72) Erfinder: Greber, Jörg Friedrich, 38154 Königslutter (DE)
(74) Vertreter: Einsel, Martin
(86) Internationale Anmeldenummer: PCT/EP2000/008793
(87) Internationale Veröffentlichungsnummer: WO 2001/020212

(56) Entgegenhaltungen:
- DE-A- 2 418 797
- US-A- 3 740 958
- US-A- 4 537 223

## Beschreibung

Die Erfindung betrifft ein Rohr für Rohrleitungen, insbesondere für korrosive oder abrasive Medien mit einer Wandung, die einen Hohlraum zum Durchleiten des Mediums begrenzt, wobei die Kontaktfläche der Wandung zum Hohlraum Gummi aufweist.

Zur Förderung von Flüssigkeiten oder Suspensionen werden häufig Rohrleitungen eingesetzt. Diese Rohrleitungen bestehen aus Metalleitungen, beispielsweise Stahlrohren. Die Rohrleitungen können über längere Strecken geführt werden, bei unregelmäßigen Bodenverhältnissen sind entsprechende Unterstützungen an bestimmten Punkten vorzusehen.

Stahlrohre auch guter Qualität haben Probleme, korrosive oder abrasive Medien zu fördern. Die Medien führen zu einer raschen Zersetzung der Rohrleitungen, schließlich zum Versagen und es müssen dann die Rohrleitungen erneuert werden.

Es ist daher bekannt, gummierte Rohre für derartige Rohrleitungen einzusetzen. Gummierte Rohre bestehen aus einem Metallrohr, das innen durch ein sehr aufwendiges Produktionsverfahren eine Gummischicht aufweist. Diese Gummischicht ist eingeklebt oder vulkanisiert. Die Gummischicht wird auch in den Flanschbereich am Ende des jeweiligen Rohres hinein verlängert, so dass auch die Flanschfläche von dem Gummi geschützt wird, da sonst die Korrosions- und Abrasionseffekte dort auftreten können.

Rohrleitungen mit gummierten Rohren werden in vielen Anlagen der chemischen Technik eingesetzt und haben sich grundsätzlich bewährt. Ein Schwachpunkt von gummierten Rohrleitungen ist ihre Empfindlichkeit gegenüber Spannungen, die auf die Rohrleitungen wirken. Diese Spannungen führen dazu, dass sich die Gummischicht tendentiell von der sie umgebenden und umhüllenden Metallschicht ablöst, so dass die Rohrleitung defekt ist und wiederum ausgetauscht werden muss.

Bei der Innenbeschichtung von Rohren mit Kunststoff stellt die DE 24 18 797 A1 darüber hinaus die Tendenz zur Ablösung aufgrund des Schwindungsverhaltens des Kunststoffs fest.

Ein weiteres technisches Problem bei gummierten Rohren besteht darin, dass die bei der Gummierung des Rohres aufbringbaren Gummischichtstärken begrenzt sind. Dies führt dazu, dass gummierte Rohre für die Förderung von stark abrasiven oder verschleißenden Medien den Nachteil haben, dass die zum Schutz vorgesehene Gummischicht aufgrund ihrer leider nur geringen Wandstärke sehr schnell verschlissen ist und die Rohrleitung damit ausfällt.

Außerdem sind die Verfahren zur Herstellung dieser gummierten Rohrleitungen sehr arbeitsintensiv und aufwendig. Dieser Aufwand steigt außerdem stark an, wenn Rohrleitungen mit größerem Durchmesser mit Gummi ausgekleidet werden sollen und es ist darüber hinaus auch nicht möglich, Rohre unbegrenzter Länge mit einer Gummierung auf der Innenseite auszurüsten, da die Zugänglichkeit von den Rohrenden her gesehen natürlich abnimmt.

Unbrauchbar wären Kunststoffrohre, wie sie die DE 297 01 612 U1 für den Einsatz bei Gasleitungen, also nicht abrasiven oder korrosiven Medien, und die DE 39 07 785 A1 bei Hauswasserleitungen, ebenfalls relativ wenig problematischen Medien, vorschlägt. Auch die in der DE 297 01 612 U1 ebenfalls vorgeschlagenen metallischen Stützgeflechte zur Erhöhung der Festigkeit bei steigenden Drücken in diesen plastischen Rohren führen nicht dazu, etwa Metallrohre mit Gummierung auch nur im entferntesten ersetzen zu können, da es schon an der Verschleißfestigkeit fehlt. Es geht in beiden Fällen ausschließlich um Verringerung von Wandstärken durch druckfestere Einlagen.

Die DE 24 18 797 A1 schlägt ein mit einer Armierung versehenes Rohr aus Chemiewerkstoff (auch Gummi) vor, das flexibel der Geländeführung angepasst werden kann, die Schichten außerhalb und innerhalb der Armierung sollen eine feste Verbindung eingehen und so möglichst das Schwindungsverhalten kompensieren.

Die WO 99/11960 A1 schlägt einen korrosions- und feuerbeständigen Schlauch vor, der aus Gummischichten mit dazwischen angeordneten Verstärkungsschichten aufgebaut ist und für den Einsatz bei der Feuerwehr und zu Feuerlöschzwecken auf Bohrinseln und Schiffen dienen soll. Dabei sollen sich rautenförmige Muster von sich unter einem Winkel von 54° kreuzenden Einzelfäden bilden, welche dann die Verstärkungsschichten bilden. Der Winkel von 54° ist wesentlich für diese Schläuche, da er nach der Schlauchbaulehre wichtig für maximale Flexibilität des Schlauches und Verhalten unter Druck ist und die Schläuche auf Trommeln zum Transport aufgewickelt werden müssen.

Wesentlich bei der Förderung korrosiver und abrasiver Medien über längere Strecken ist die Dimensionsstabilität. Es kommen praktisch nur freitragende Rohre in Betracht. Eine Beweglichkeit des Rohres muss ausgeschlossen werden, da die Unterstützungskonstruktionen sehr aufwendig werden, wenn keine freitragenden Rohre auf dem Träger verwendet werden. Der Einsatz von Schläuchen kommt daher im Regelfall nicht in Betracht.

Aufgabe der Erfindung ist es demgegenüber, ein Rohr für eine Rohrleitung vorzuschlagen, das weniger aufwendig ist und trotzdem in der Zuverlässigkeit und weiteren Anforderungen herkömmlichen Metallrohren gleichkommt.

Diese Aufgabe wird gelöst durch ein Rohr für Rohrleitungen, insbesondere für korrosive oder abrasive Medien, mit einer Wandung, die einen Hohlraum zum Durchleiten des Mediums begrenzt, bei dem die Kontaktfläche der Wandung zum Hohlraum Gummi aufweist, bei dem die Wandung im Wesentlichen aus Gummi besteht und bei dem in der Wandung eine Versteifungseinlage vorgesehen ist, die eine Dimensionsstabilität des Rohres gewährleistet, bei dem zusätzlich eine Verstärkungseinlage zwischen der Versteifungseinlage und der Kontaktfläche zwischen der Wandung und dem Hohlraum des Rohres vorgesehen ist und bei dem die Verstärkungseinlage ein Druckträger aus textilem oder mechanischem Gewebe ist.

Mit einer derartigen Konzeption lässt sich überraschend der Problematik begegnen. Es entsteht ein freitragendes Rohr, das allen Anforderungen genügt, die an herkömmliche Metallrohrleitungen gestellt werden. Außerdem besteht die Kontaktfläche für die korrosiven oder abrasiven Medien aus Gummi. Die Rohrinnenwandung, die mit diesen Medien in Kontakt kommt, besteht nämlich ebenso wie bei herkömmlichen gummierten Rohrleitungen aus Gummi und kann damit auch den inneren Beanspruchungen standhalten. Die Vorteile metallischer Rohrleitungen mit Innengummierung sind damit in vollem Umfang auch bei der Erfindung gegeben.

Die Nachteile von gummierten Rohrleitungen dagegen fallen fort. So ist das erfindungsgemäße Rohr unempfindlich gegen Spannungen und Schlagbeanspruchung. Während die Wandstärken von Gummischichten in gummierten Rohrleitungen einer Limitierung unterliegen, kann das erfindungsgemäße Rohr ohne eine solche Beschränkung vorgesehen werden. Es besteht im Wesentlichen aus Gummi, so dass auch eine Abnutzung nicht zu einem Verschleiß mit anschließender Korrosion führen kann. Außerdem entstehen auch diejenigen Vorteile, die sonst ein Schlauch gegenüber einem gummierten Metallrohr hat, so eine Unempfindlichkeit gegenüber Spannungen und gegenüber Schlagbeanspruchung.

Während Schläuche wie schon ausgeführt für diese Einsatzzwecke nicht in Betracht kommen, unterliegen die erfindungsgemäßen im Wesentlichen aus Gummi bestehenden Rohre diesen Einschränkungen nicht. Aufgrund seiner Steifigkeit kann es wie ein gummiertes Metallrohr verlegt werden, d. h., es braucht zwischen den einzelnen Auflagepunkten des Rohres nicht durch Stützkonstruktionen gehalten zu werden. Es ist in jeder Beziehung ausreichend dimensionsstabil, so dass es nicht unzulässig zwischen den Stützpunkten durchhängt.

Anders als beispielsweise die bekannten Kunststoffleitungen aus der DE 39 07 789 A1 oder der DE 297 01 612 U1 oder die flexiblen armierten Rohre aus der DE 24 18 797 A1 und die Feuerlöschschläuche aus der WO 99/11960 A1 ist auch nicht nur eine Verstärkungsschicht vorgesehen, die eine Reduzierung der Wandstärke, eine Verbesserung des Schwindungsverhaltens oder die Erhöhung der Druckfestigkeit zum Ziel hat. Stattdessen ist eine Versteifungseinlage vorgesehen, die zu einer Dimensionsstabilisierung, also dem Gegenteil von Flexibilität, führt.

In einer bevorzugten Ausführungsform ist zusätzlich zu der Versteifungseinlage auch noch eine Verstärkungsschicht vorgesehen. Zwei verschiedene und damit auch unabhängig voneinander dimensionier- und wählbare Bauelemente dienen dann einerseits der Versteifung und Formstabilisierung und andererseits der Festigkeit, einem völlig anderen Kriterium.

Gegenüber einem gummierten Metallrohr entsteht bei dem erfindungsgemäßen Rohr noch zusätzlich der Vorteil, dass es wesentlich leichter ist.

Dies vereinfacht den Transport und reduziert auch die dabei entstehenden Kosten. Für seine Montage sind keine schweren Hebezeuge oder andere schwere Werkzeuge notwendig. Das gleiche gilt beim Beladen und Entladen während des Transportes.

Durch die Erfindung wird es möglich, die günstigen Materialeigenschaften von Gummi in Bereichen zu nutzen, die bisher aufgrund der Schwierigkeiten zur Herstellung von großen, gummierten Rohrleitungen nicht zugänglich waren.

Besonders bevorzugt ist es, wenn die erfindungsgemäßen Rohre von innen nach außen aufgebaut sind aus einer Seele, die aus korrosionsfestem oder abrasionsfestem Gummi besteht, darauf folgend einem Druckträger aus textilem oder metallischem Gewebe, darauf einer Versteifungseinlage und schließlich einer Decke aus witterungs- oder umweltbeständigem Gummi.

Möglich ist es auch, zusätzliche Zwischenlagen zwischen diesen vier vorbeschriebenen Lagen aus Gummi, Gewebe und/oder Stahldrähten vorzusehen.

Die Versteifungseinlage kann insbesondere aus gelochten Blechen bestehen. Diese gelochten Bleche können auf eine ggf. mit einer Gummilage abgedeckten Verstärkungseinlage so aufgelegt werden, dass der Schlauch im Wesentlichen über seinen Umfang hin radial umschlossen ist.

Alternativ ist es auch möglich, die Versteifungseinlage mit Blechbändern auszurüsten, die spiralig auf eine Verstärkungseinlage aufgelegt werden. Die Blechbänder reichen dabei vorzugsweise von einem Ende des Rohres zum anderen, wobei für jedes spiralig aufgebrachte Blechband ein gegenläufig spiraliges Blechband aufgelegt wird und die Blechbänder an den Kreuzungspunkten miteinander verschweißt werden.

Bevorzugt werden die Rohre an den Enden mit Gummiflanschen ausgerüstet, die gegebenenfalls mit Verstärkungseinlagen angebaut werden.

Dabei wird bevorzugt vorgesehen, dass die Verstärkungseinlagen des Rohres bis in die Flansche reichen und so eine kraftschlüssige Verbindung zwischen Gummirohr und Flansch gewährleisten. Die Gummiflanschen können bevorzugt an ihrer Dichtfläche aus dem gleichen Gummi ausgebildet werden, aus dem die Seele des Gummirohres besteht. Dadurch entsteht eine homogene Qualität der Flanschdichtflächen und der Seele.

Eine weitere vorteilhafte Ausführungsform der Flansche ist die Ausbildung von Gummiwülsten an den Rohrenden, die so dimensioniert sind, dass Stahlflansche hinter sie gelegt werden können und so eine kraftschlüssige Verbindung zwischen Rohr und Flansch bilden. Die Gummiwülste laufen als Ring um je ein Rohrende herum und enthalten einen Stahlkem. Die Verstärkungseinlagen des Rohres umschlingen den Stahlkern und bilden eine kraftschlüssige Verbindung zwischen Wulst und Rohr. Die Wülste sind an ihrer Außenfläche so ausgebildet, dass sie eine Dichtfläche aus dem Gummi formen, aus dem die Gummiseele des Rohres besteht.

In einer Variante besteht die Versteifungseinlage aus textilem oder metallischem Gewebe, das so in das Gummirohr eingebaut ist, dass die Ketten der Gewebe im Wesentlichen parallel und senkrecht zur Achse des Rohres verlaufen. Dabei werden bevorzugt mindestens zwei Gewebeeinlagen mit unterschiedlicher Laufrichtung der Kettfäden eingebaut.

Die Versteifungseinlage kann aus Federstahldrähten bestehen, die spiralig um die Verstärkungseinlage aufgelegt werden. Die Verstärkungseinlage kann wiederum mit einer Gummilage abgedeckt sein. Die Federstahldrähte reichen dabei wiederum von einem Ende des Rohres zum anderen, wobei zu jeder Spirale eine gegenläufige Spirale entsprechend aufgelegt wird. Die Federstahldrähte sind an den Kreuzungspunkten miteinander verbunden. Dadurch wird die Dimensionsstabilität weiter erhöht.

Der von den beiden Federstahldrähten am Kreuzungspunkt eingeschlossene Winkel sollte von 54° möglichst deutlich abweichen, insbesondere weniger als 45° oder mehr als 60° betragen. Ein Winkel von 54° führt tendenziell zu Flexibilität, die erfindungsgemäß gerade nicht gewünscht ist.

Alternativ kann die Versteifungseinlage aus Stahldrähten bestehen, die im Wesentlichen parallel und senkrecht zur Rohrachse auf die Verstärkungseinlage aufgelegt werden und an ihren Kreuzungspunkten miteinander verschweißt sind.

Es ist auch möglich, das Rohr so auszurüsten, dass es einen oder mehrere Abgänge ausweist, die ihrerseits in gleicher Form ausgebildet sind, so dass sich ein T-Stück oder ein Kreuzungsstück ergibt.

Im Folgenden wird anhand der Zeichnung ein Ausführungsbeispiel der Erfindung im Einzelnen erläutert. Es zeigen:
- **Figur 1**: eine perspektivische Darstellung eines typischen Einsatzzweckes eines solchen Rohres, und
- **Figur 2**: einen schematischen Querschnitt durch ein erfindungsgemäßes Rohr,
- **Figur 3**: eine schematische Darstellung einer Ansicht einer bevorzugten Ausführungsform eines Rohres.

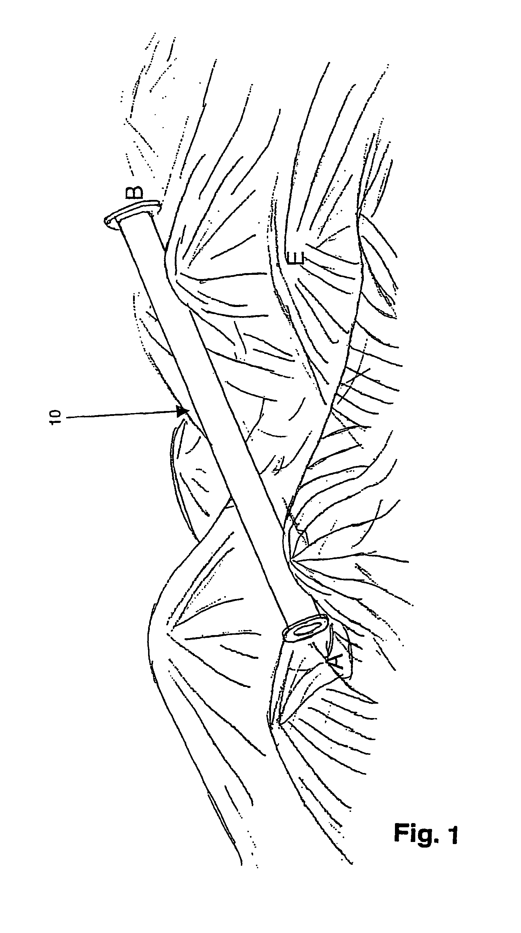

**Figur 1** zeigt einen typischen Anwendungsfall, wie er sich in der Praxis darstellt. In dem unebenen Gelände eines Kieswerks soll von einer Abfuhrstation A eine bestimmte Menge beispielsweise eines Kies-Sand-Wasser-Gemisches zu einem Ort B befördert werden. Der Erdboden E ist jedoch außerordentlich uneben, hier sind Höhenunterschiede von mehreren Metern vorgesehen, die beispielsweise zuvor durch den Kiesabbau entstanden sind. Diese Höhenunterschiede müssen überbrückt werden, da das entsprechende Medium nicht bergauf und bergab befördert werden kann und soll. Aus diesem Grunde können beispielsweise keine Schläuche eingesetzt werden. Es ist also erforderlich, von dem Ort A zum Ort B ein Rohr 10 zu verlegen. Dieses ist im Stand der Technik herkömmlich ein Metallrohr oder Kunststoffrohr. Der Anblick eines erfindungsgemäßen Rohres 10 ist jedoch in dieser Darstellung identisch.

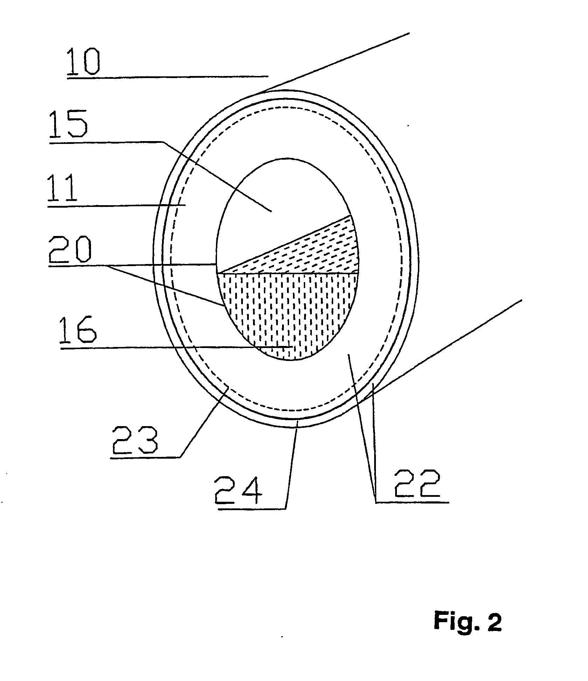

**Figur 2** zeigt nun einen Schnitt durch ein erfindungsgemäßes Rohr 10. Es besitzt eine Wandung 11 mit kreisförmigem Außenumfang. Außerhalb der Wandung 11 ist die Umgebungsluft vorgesehen. Das Material der Wandung 11 sollte daher so vorgesehen sein, dass äußeren Temperaturschwankungen und auch anderen äußeren Anforderungen genügt ist, die beispielsweise ein Verlegen ermöglichen.

Innerhalb der Wandung 11 befindet sich wie bei einem Rohr 10 generell üblich ein Hohlraum 15, der das Rohr 10 längs durchzieht und einen konstanten Querschnitt und einen kreisförmigen Umfang besitzt. In dem Hohlraum 15 strömt das Medium 16, das ein abrasives oder korrosives Medium sein kann, in der Figur 1 beispielsweise ein Kies-Sand-Wasser-Gemisch. In anderen Fällen kann es sich auch um Säuren oder Laugen oder andere Chemikalien handeln. In der Figur 2 ist angedeutet, dass dieses Medium 16 den Hohlraum 15 etwa bis zur Hälfte füllt, andere Füllungsgrade sind natürlich vorstellbar. Das Rohr 10 mit seiner Wandung 11 kann in jeder beliebigen Lage verlegt sein. Eine Kontaktfläche 20 bildet sich automatisch zwischen dem Hohlraum 15 und der Wandung 11 aus. Die gesamte Kontaktfläche 20 kann bei vollständiger Füllung des Hohlraumes 15 mit dem Medium 16 in Berührung kommen. Es ist aber auch zu berücksichtigen, dass nicht von vornherein gesagt werden kann, in welcher Lage das Rohr 10 verlegt wird, so dass die gesamte Kontaktfläche 20 gleichmäßig in der Lage sein muss, den Beanspruchungen durch das Medium 16 standzuhalten.

Die Wandung 11 selbst besteht im Wesentlichen aus Gummi 22. Unter "im Wesentlichen" sind hier Anteile von 50 %, insbesondere von deutlich mehr als 80 % zu verstehen.

Insbesondere benachbart zur Kontaktfläche 20, aber auch auf dem äußeren Umfang der Wandung 11 besteht die Wandung 11 praktisch ausschließlich aus Gummi 22. Die Nicht-Gummianteile befinden sich alle im Inneren der Wandung 11 und kommen weder mit der Außenumgebung noch mit dem Medium 16 in Kontakt.

Diese Nicht-Gummianteile sind in erster Linie eine Versteifungseinlage 24. Diese Versteifungsanlage 24 kann beispielsweise aus Lochblechen bestehen oder aber aus einem Geflecht von Kettfäden eines textilen oder metallischen Gewebes oder aus Federstahldrähten, die in verschiedener Orientierung in dem Gummi 22 der Wandung 11 eingebracht sein können.

Diese Versteifungseinlage 24 ist in der Lage, dem gesamten Rohr Dimensionsstabilität zu geben. Es verhält sich also wie ein Rohr und nicht wie ein Schlauch, was im Hinblick auf das Material "Gummi" auch für den Fachmann unerwartet und zunächst überraschend ist.

Die Verstärkungseinlage 23, die aus textilem oder metallischem Gewebe besteht, nimmt die Druck- und Zugkräfte bei Betrieb des Rohres 10 auf und leitet sie in die Flansche weiter.

Insbesondere bei der Verwendung von Lochblechen als Versteifungseinlage 24 wird aber sofort klar, dass dadurch die gewünschte Dimensionsstabilität gegeben werden kann. Diese Stabilität wird nicht nur in radialer Richtung erreicht, in der das Lochblech den Hohlraum 15 symmetrisch umgibt, und zwar vorzugsweise vollständig in einem geschlossenen Kreis. Auch in axialer Richtung entsteht eine Dimensionsstabilität, dadurch die vollständige Schließungs-, Wölbungs- und Biegungseffekten stark entgegen gewirkt wird.

Trotzdem behält das Rohr 10 durch seine Ausbildung, im Wesentlichen aus Gummi 22, eine Elastizität. Es kann leicht gebogen werden um zum Beispiel Ungenauigkeiten beim Bau der Unterstützungskonstruktion auszugleichen. Damit entfallen aufwendige Schweiß- und Anpassarbeiten.

Aber nicht nur bei Lochblechen, sondern auch bei den erwähnten Geweben und Geflechten und auch bei doppelt gegenläufig spiralförmigen Stahldrähten oder Federstahldrähten lässt in jeder Richtung eine derartige Dimensionsstabilität erreichen.

Es werden dabei Verbindungen zwischen den mehreren Drähten oder Kettfäden von Geweben erzeugt, beispielsweise durch Verschweißen, bevor die entsprechenden Drähte, die später die Versteifungseinlage 24 bilden, von der Masse des Gummis 22 während des Herstellungsprozesses des Rohres 10 umgeben sind.

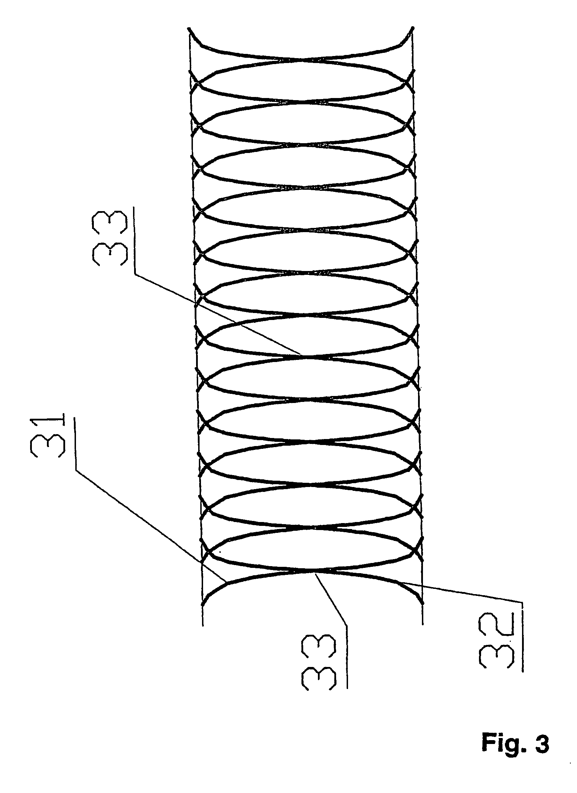

**Figur 3** zeigt rein schematisch eine solche Anordnung von zwei Federstahldrähten 31 und 32, die jeweils innerhalb der Wandung 11 spiralförmig den Hohlraum 15 umlaufen. Diese beiden Federstahldrähte 31 und 32 sind an verschiedenen Kreuzungspunkten 33 miteinander verbunden. Dadurch bleiben sie in gewissem Rahmen elastisch, sind jedoch gegen federnde axiale Verschiebungen weitgehend resistent.

Mit derartigen erfindungsgemäßen Rohren können Rohrleitungen verlegt werden, die einfach wie herkömmliche Metallrohre eingesetzt werden können. Es müssen keine aufwendigen Unterstützungskonstruktionen wie bei Schläuchen vorgesehen werden, sondern die erfindungsgemäßen Rohre können auch freitragend auf Träger aufgelegt werden, wenn dies zur Überbrückung besonders großer Strecken erforderlich wird.

Aufgrund der in gewissem Maße vorhandenen Beweglichkeit bestimmter Rohrabschnitte zueinander ist es sogar möglich, eine Rohrleitung beispielsweise in der Kiesförderindustrie ausschließlich aus derartigen Rohren homogen zusammenzusetzen und dadurch die Lebensdauer der Gesamtrohrleitung deutlich zu steigern. Die Rohre sind ausreichend dimensionsstabil und hängen nicht etwa zwischen den Auflagepunkten durch. Es bleibt ständig eine Förderung durch das Rohr möglich.

## Patentansprüche

1. Rohr (10) für Rohrleitungen, insbesondere für korrosive oder abrasive Medien (16), mit einer Wandung (11), die einen Hohlraum (15) zum Durchleiten des Mediums (16) begrenzt,
bei dem die Kontaktfläche (20) der Wandung (11) zum Hohlraum (15) Gummi aufweist,
bei dem die Wandung (11) im Wesentlichen aus Gummi (22) besteht und
bei dem in der Wandung (11) eine Versteifungseinlage (24) vorgesehen ist, die eine Dimensionsstabilität des Rohres (10) gewährleistet,
**bei dem** zusätzlich eine Verstärkungseinlage (23) zwischen der Versteifungseinlage (24) und der Kontaktfläche (22) zwischen der Wandung (11) und dem Hohlraum (15) des Rohres (10) vorgesehen ist und
bei dem die Verstärkungseinlage (23) ein Druckträger aus textilem oder metallischem Gewebe ist.

2. Rohr nach Anspruch 1,
**dadurch gekennzeichnet,**
**dass** die Versteifungseinlage (24) aus einem oder mehreren Blechen besteht, die radial in der Wandung (11) angeordnet sind.

3. Rohr nach Anspruch 2,
**dadurch gekennzeichnet,**
**dass** die Bleche gelochte Bleche sind.

4. Rohr nach Anspruch 2,
**dadurch gekennzeichnet,**
**dass** die Bleche in Form von Blechbändern vorgesehen sind, die spiralig aufgelegt sind, wobei die Blechbänder von einem Ende des Rohres (10) bis zum anderen reichen und für jedes der spiralig aufgebrachten Blechbänder ein gegenläufig spiraliges Blechband vorgesehen ist, und dass die Blechbänder an den Kreuzungspunkten miteinander verbunden sind.

5. Rohr nach Anspruch 1,
**dadurch gekennzeichnet,**
**dass** die Versteifungseinlage aus Federstahldrähten besteht, die spiralig so angeordnet sind, dass die Federstahldrähte von einem Ende des Rohres (10) zum anderen reichen, wobei zu jedem spiralförmig angeordneten Federstahldraht eine gegenläufige Spirale vorgesehen ist, und
**dass** die Federstahldrähte an ihren Kreuzungspunkten miteinander verbunden sind.

6. Rohr nach Anspruch 5,
**dadurch gekennzeichnet,**
**dass** die Federstahldrähte sich unter einem von 54° deutlich verschiedenen, insbesondere weniger als 45° oder mehr als 60° betragenden Winkel schneiden.

7. Rohr nach Anspruch 1,
**dadurch gekennzeichnet,**
**dass** die Versteifungseinlage (24) aus Stahldrähten besteht, die im Wesentlichen parallel und senkrecht zur Achse des Rohres (10) radial angeordnet sind und
**dass** die Stahldrähte an ihren Kreuzungspunkten miteinander verbunden sind.

8. Rohr nach Anspruch 1,
**dadurch gekennzeichnet,**
**dass** die Versteifungseinlage (24) aus textilem oder metallischem Gewebe besteht,
**dass** das Gewebe Kettfäden aufweist, und
**dass** die Kettfäden des Gewebes im Wesentlichen barallel und senkrecht zur Achse des Rohres (10) radial verlaufen, und
**dass** mindestens zwei Gewebeeinlagen mit unterschiedlicher Laufrichtung dieser Kettfäden vorgesehen sind.

9. Rohr nach einem der vorstehenden Ansprüche,
**dadurch gekennzeichnet,**
**dass** weitere Zwischenlagen aus Gummi, Gewebe und/oder Stahldrähten vorgesehen sind.

10. Rohr nach einem der vorstehenden Ansprüche,
**dadurch gekennzeichnet,**
**dass** an mindestens einem der Enden des Rohres (10) Gummiflansche vorgesehen sind,
**dass** die Gummiflansche zumindest an ihrer Dichtfläche aus dem gleichen Gummi ausgebildet werden, aus dem das Gummi (22) der Wandung (11) des Rohres (10) besteht und
**dass** gegebenenfalls vorhandene Verstärkungseinlagen (23) bis in die Flansche reichen.

11. Rohr nach einem der vorstehenden Ansprüche,
**dadurch gekennzeichnet,**
**dass** an mindestens einem der Enden des Rohres (10) Gummiwülste vorgesehen sind,
**und dass** die Gummiwülste so dimensioniert sind, dass Stahlflansche hinter sie gelegt werden können und so eine kraftschlüssige Verbindung zwischen dem Hauptkörper des Rohres (10) und einem Flansch bilden.

12. Rohr nach Anspruch 11,
**dadurch gekennzeichnet,**
**dass** die Gummiwülste als Ring um das jeweilige Ende des Rohres (10) herum laufen und einen Stahlkern enthalten,
**dass die** Verstärkungseinlagen (23) den Stahlkern umschlingen,
**und dass** die Gummiwülste eine Dichtfläche bilden.

13. Rohr nach Anspruch 12,
**dadurch gekennzeichnet,**
**dass** die Dichtfläche aus dem gleichen Gummi ausgebildet ist, aus dem das Gummi (22) der Wandung (11) des Rohres (10) besteht.

14. Rohr nach einem der vorstehenden Ansprüche,
**dadurch gekennzeichnet,**
**dass** einer oder mehrerer Abzweige oder Abgänge vorgesehen ist, die in gleicher Form wie das Rohr (10) so ausgebildet sind, dass sich ein T-Stück oder ein Kreuzungsstück ergibt.

## Claims

1. Pipe (10) for pipelines, in particular for corrosive or abrasive media (16), with a wall (11), which defines a cavity (15) for the passage of the medium (16),
wherein the contact surface (20) of the wall (11) with the cavity (15) comprises rubber,
wherein the wall (11) is substantially composed of rubber (22) and
wherein a stiffening insert (24), which assures a dimensional stability of the pipe (10), is provided in the wall (11),
wherein a strengthening insert (23) is additionally provided between the stiffening insert (24) and the contact surface (22) between the wall (11) and the cavity (15) of the pipe (10), and
wherein the strengthening insert (23) is a pressure bearer composed of a textile or metal fabric.

2. Pipe according to Claim 1, **characterised in that** the stiffening insert (24) consists of one or more metal sheets, which are arranged radially in the wall (11).

3. Pipe according to Claim 2, **characterised in that** the metal sheets are perforated sheets.

4. Pipe according to Claim 2, **characterised in that** the metal sheets are provided in the form of sheet metal bands, which are applied in a spiral, wherein the sheet metal bands extend from one end of the pipe (10) to the other and for each of the sheet metal bands attached in a spiral a sheet metal band spiralled in contrary direction is provided, and that the sheet metal bands are connected to one another at the intersection points.

5. Pipe according to Claim 1, **characterised in that** the stiffening insert consists of spring steel wires, which are arranged in a spiral such that the spring steel wires extend from one end of the pipe (10) to the other, wherein for each spring steel wire arranged in a spiral a spiral in contrary direction is provided, and that the spring steel wires are connected to one another at their intersection points.

6. Pipe according to Claim 5, **characterised in that** the spring steel wires intersect at an angle clearly different from 54°, in particular an angle amounting to less than 45° or more than 60°.

7. Pipe according to Claim 1, **characterised in that** the stiffening insert (24) consists of steel wires, which are arranged radially substantially parallel and perpendicular to the axis of the pipe (10), and that the steel wires are connected to one another at their intersection points.

8. Pipe according to Claim 1, **characterised in that** the stiffening insert (24) consists of textile or metal fabric, that the fabric has warp threads, and that the warp threads of the fabric run radially substantially parallel and perpendicular to the axis of the pipe (10), and that at least two fabric inserts with these warp threads running in different directions are provided.

9. Pipe according to one of the preceding claims, **characterised in that** further intermediate layers made of rubber, fabric and/or steel wires are provided.

10. Pipe according to one of the preceding claims, **characterised in that** rubber flanges are provided on at least one end of the pipe (10), that at least on their sealing surface the rubber flanges are made from the same rubber as the rubber (22) of the wall (11) of the pipe (10), and that any strengthening inserts (23) provided extend into the flanges.

11. Pipe according to one of the preceding claims, **characterised in that** on at least one end of the pipe (10) rubber beads are provided, and that the rubber beads are dimensioned such that steel flanges can be placed behind them and thus form a force-transmitting connection between the main body of the pipe (10) and a flange.

12. Pipe according to Claim 11, **characterised in that** the rubber beads run around the respective end of the pipe (10) in the form of a ring and contain a steel core, that the strengthening inserts (23) loop around the steel core, and that the rubber beads form a sealing surface.

13. Pipe according to Claim 12, **characterised in that** the sealing surface is made from the same rubber as the rubber (22) of the wall (11) of the pipe (10).

14. Pipe according to one of the preceding claims, **characterised in that** one or more branches or outlets are provided, which are configured in the same shape as the pipe (10) such that a T-joint or a cross joint results.

## Revendications

1. Tuyau (10) pour conduites, notamment pour des milieux corrosifs ou abrasifs (16), comprenant une paroi (11) qui délimite une cavité (15) destinée au passage du milieu (16),
dans lequel la surface de contact (20) entre la paroi (11) et la cavité (15) comprend du caoutchouc,
dans lequel la paroi (11) est constituée sensiblement de caoutchouc (22) et
dans lequel il est prévu dans la paroi (11) une couche de renforcement (24) qui garantit une stabilité dimensionnelle du tuyau (10),
dans lequel il est prévu en plus entre la paroi (11) et la cavité (15) du tuyau (10) une couche de renforcement (23) entre la couche de renforcement (24) et la surface de contact (22) et
dans lequel la couche de renforcement (23) est un support de pression en tissu textile ou métallique.

2. Tuyau selon la revendication 1,
**caractérisé en ce que**
la couche de renforcement (24) est constituée d'une ou de plusieurs tôle(s), qui est (sont) disposée(s) dans le sens radial dans la paroi (11).

3. Tuyau selon la revendication 2,
**caractérisé en ce que**
les tôles sont des tôles perforées.

4. Tuyau selon la revendication 2,
**caractérisé en ce que**
les tôles sont prévues sous forme de bandes de tôle qui sont placées en spirale, les bandes de tôle parvenant d'une extrémité du tuyau (10) à l'autre extrémité et une bande de tôle en spirale inversée étant prévue pour chacune des bandes de tôle appliquées en spirale, et **en ce que** les bandes de tôle sont reliées les unes aux autres aux points de croisement.

5. Tuyau selon la revendication 1,
**caractérisé en ce que**
la couche de renforcement est constituée de fils d'acier à ressort qui sont disposés en spirale, de sorte que les fils d'acier à ressort parviennent d'une extrémité du tuyau (10) à l'autre extrémité, une spirale inversée étant prévue pour former chaque fil d'acier à ressort disposé en forme de spirale, et
**en ce que** les fils d'acier à ressort sont reliés les uns aux autres en leurs points de croisement.

6. Tuyau selon la revendication 5,
**caractérisé en ce que**
les fils d'acier à ressort se coupent selon un angle nettement différent de 54°, notamment inférieur à 45° ou supérieur à 60°.

7. Tuyau selon la revendication 1,
**caractérisé en ce que**
la couche de renforcement (24) est constituée de fils d'acier, qui sont disposés dans le sens radial sensiblement parallèlement et perpendiculairement à l'axe du tuyau (10) et
**en ce que** les fils d'acier sont reliés les uns aux autres en leurs points de croisement.

8. Tuyau selon la revendication 1,
**caractérisé en ce que**
la couche de renforcement (24) est constituée d'un tissu textile ou métallique,
**en ce que** le tissu comprend des fils de chaîne, et
**en ce que** les fils de chaîne du tissu s'étendent dans le sens radial sensiblement parallèlement et perpendiculairement à l'axe du tuyau (10), et
**en ce qu'**au moins deux couches de tissu présentant un sens de fils de chaîne différent sont prévues.

9. Tuyau selon l'une quelconque des revendications précédentes,
**caractérisé en ce que**
d'autres couches intermédiaires en caoutchouc, en tissu et/ou en fils d'acier sont prévues.

10. Tuyau selon l'une quelconque des revendications précédentes,
**caractérisé en ce que**
des brides en caoutchouc sont prévues sur au moins une des extrémités du tuyau (10),
**en ce que** les brides en caoutchouc sont conçues au moins sur leur surface d'étanchéité dans le même caoutchouc que celui dont est constitué le caoutchouc (22) de la paroi (11) du tuyau (10) et
**en ce que** des couches de renforcement (23) éventuellement présentes parviennent jusque dans les brides.

11. Tuyau selon l'une quelconque des revendications précédentes,
**caractérisé en ce que**
des bourrelets en caoutchouc sont prévus sur au moins une des extrémités du tuyau (10),
et **en ce que** les bourrelets en caoutchouc sont dimensionnés de sorte que des brides d'acier peuvent être placées derrière ceux-ci et forment ainsi une liaison par adhérence entre le corps principal du tuyau (10) et une bride.

12. Tuyau selon la revendication 11,
**caractérisé en ce que**
les bourrelets en caoutchouc s'étendent de façon annulaire autour de l'extrémité respective du tuyau (10) et contiennent un noyau en acier,
**en ce que** les couches de renforcement (23) entourent le noyau d'acier,
et **en ce que** les bourrelets en caoutchouc forment une surface d'étanchéité.

13. Tuyau selon la revendication 12,
**caractérisé en ce que**
la surface d'étanchéité est conçue dans le même caoutchouc que celui dont est constitué le caoutchouc (22) de la paroi (11) du tuyau (10).

14. Tuyau selon l'une quelconque des revendications précédentes,
**caractérisé en ce que**
une ou plusieurs branche(s) ou déviation(s) est(sont) prévue(s), qui présente(nt) la même forme que le tuyau (10), de sorte que cela engendre une pièce en T ou une pièce de croisement.
